# EUROPEAN PATENT SPECIFICATION

(11) **EP 2 380 437 B1**
(45) Date of publication and mention of the grant of the patent: **28.08.2013**
(21) Application number: 11163430.9
(22) Date of filing: 21.04.2011
(51) Int. Cl.: A01K 67/033

(54) **Device and method of biological parasite control in poultry husbandry using predatory mites**
Vorrichtung und Methode zur biologischen Parasitenbekämpfung in Geflügelaufzuchten mittels Raubmilben
Dispositif et méthode de traitement biologique antiparasitaire pour des élevages de volaille

(30) Priority: 23.04.2010 NL 2004601
(43) Date of publication of application: 26.10.2011
(73) Proprietor: Evers, Johnny, 9431 HD Westerbork (NL)
(72) Inventor: Evers, Johnny, 9431 HD Westerbork (NL)
(74) Representative: Verdijck, Gerardus

(56) References cited:
- WO-A1-2007/136246
- US-A- 3 851 417
- US-B1- 6 293 223
- CRESPO, D.C.; LECUONA, R.E.; HOGSETTE, J.A.: "Biological Control: An important Component in Integrated Management of Musca domestica (Diptera: Muscidae) in Caged-Layer Poultry Houses in Buenos Aires, Argentina", BIOLOGICAL CONTROL, vol. 13, no. 1, BC980632, 1 September 1998 (1998-09-01), pages 16-24, XP002609827, ISSN: 1049-9644
- Kaufman, P.E.; Rutz, D.A.; Pitts, C.W.: "Pest Management Recommendations for Poultry", 1 January 2000 (2000-01-01), Publications Distribution center, The Pennsylvania State University, University Park, XP002609828, * the whole document *
- HENN, T.; WEINZIERL, R.; KOEHLER, P.G.: "Beneficial Insects and Mites", COOPERATIVE EXTENSION SERVICE DOCUMENT, INSTITUTE FOR FOOD AND AGRICULTURAL SCIENCES, UNIVERSITY OF FLORIDA, no. ENY-276, 1 June 2009 (2009-06-01), pages 1-15, XP002609829, Gainesville
- PETROVA, V.; SALMANE, I; CUDARE, Z.: "The predatory mite (Acari, Parasitiformes: Mesostigmata (Gamasina); Acariformes: Prostigamata) community in strawberry agrocenosis", ACTA UNIVERSITATIS LATVIENSIS, BIOLOGY, vol. 676, 1 January 2004 (2004-01-01), pages 87-95, XP002609830, ISSN: 1407-2157

## Description

The present invention relates to a container for controlling a parasite occurring in animals. The container serves more particularly for a biological control of a parasite which occurs still more particularly in poultry, such as chickens.

The control of parasites, such as red mites or bird mites, for instance in poultry such as chickens, requires in practice the use of chemical substances which are introduced into a house. Such chemical agents have an adverse effect on humans and/or animals. Biological control methods known in practice and applied in horticulture are unsuitable for use with animals, particularly for use in houses with poultry.

W02007/136246 A1 discloses a container for controlling a parasite in animals.

The present invention has for its object to obviate or at least reduce the above stated problems with parasites in animals.

The present invention provides tor this purpose a container for controlling a parasite in animals according to claim 1.

By providing a container, preferably in the form of a cartridge, the housing of which is suitable for storing a substrate, the arthropods can deposit their eggs and develop therein. In addition, the housing is provided with an opening. It is possible with the container, wherein an opening is provided in the housing, to introduce arthropods into for instance a house or coop. The arthropods introduced into the house in this way will leave the container through the opening and spread around the house. In the house they will keep themselves alive by feeding off the parasites occurring in the animals accommodated in the house. Such parasites are, among others, chicken mites or red mites, as well as bird mites. Such parasites fall into the category of ectoparasites, i.e. parasitic animals, which live on the surface or skin of animals. The parasites to be prevented and controlled fall within the phylum arthropoda, or jointed limb animals, more particularly into the class arachnida, or spiders, and are still more particularly of the subclass acari, or mites and ticks. A red mite (dermanyssus gallinae) or chicken mite is an ectoparasite occurring for instance in chickens, which feeds at night on the blood of resting and sleeping chickens. During the day these parasites disappear from sight to a dark place where they mate and lay eggs. Due to the explosive growth resulting from a relatively short generation, the population can increase very quickly. Research has shown that up to 40000 of such red mites can be present on the skin of a single chicken, these being responsible for a blood decrease of 7% per night. This has the result, among others, that this chicken requires more feed to regain strength, and will usually also lay fewer eggs. Such an increase in population can be prevented by providing containers in which an arthropod, which is able to control such parasites, is arranged.

The arthropod parasite-controlling animal is preferably a predatory mite of the family of Laelapidae. These predatory mites spread from the container to the holes and cracks in the house or cage and there kill the red mites that are present. Weakening of the poultry present in the house, such as chickens, is hereby prevented. The health of this poultry improves considerably here.

The housing is suitable for comprising a substrate. This substrate is preferably a peat product or peaty soil in which larvae and eggs of preferably the predatory mite are present. It is hereby possible using such a container to introduce a succession of arthropods, preferably predatory mites, into a house with for instance poultry for a period of time of for instance 1 to 4 weeks.

A continuous control of the parasites is achieved by providing the containers with the arthropods for controlling these parasites. The risk of diseases being transmitted, such as for instance salmonella in poultry, is also reduced by the continuous reduction of the harmful parasites, since these parasites would otherwise visit a different animal every night. In addition, the working conditions for people emptying a house with for instance chickens are greatly improved by the reduction in the number of parasites present at that moment. This is also realized by the continuous control possible with the container according to the present invention. This is for instance not possible with chemical control, which must take place in an empty house. The container according to the invention can also be easily replaced while a house is filled with poultry.

The container according to the present invention is particularly suitable for use in houses, coops and cages for poultry, such as particularly chickens and also turkeys, geese and ducks. It is also possible to use such containers for animals other than poultry, for instance when keeping reptiles and aviary birds.

In an advantageous preferred embodiment according to the present invention the housing comprises biodegradable material.

By making the housing from a biodegradable material, for instance a starch product, the environmental impact of the use of such containers is reduced such that it can be referred to as a fully biological system. When the container according to the present invention is used in a house set-up it is possible for a used container, of which all the arthropods for controlling the parasites have moved from the housing to the house, to remain behind in the house if desired. The degradable material will decompose. It has also been found that poultry, such as chickens, see such a container as a toy with which they occupy themselves. The general health and welfare of these animals is hereby increased, and also avoided is that the animals for instance peck and thereby injure each other.

In an advantageous preferred embodiment according to the present invention the housing comprises a cover in which the opening is provided.

Providing the housing with a cover achieves that this housing can be filled in effective manner with substrate, such as peat product, and the parasite-controlling arthropods, after which the container can be closed. The housing can be easily closed by providing a cover. The cover can be provided here separately of the remaining housing, or for instance be connected thereto with a hinge. During transport of the container to the house set-up where the container has to be placed, the opening can be closed in order to keep all the arthropods in the container. It has however been found that the opening can remain open during transport since the arthropods, particularly the predatory mites, stay in the container when the temperature is kept low. Through being able to detach the cover from the remaining part of the housing it is also possible to refill the container according to the invention with substrate material and arthropods.

The cover preferably takes a recessed form. A part of the cover can here be recessed to some extent into the housing. In an alternative embodiment this recess forms at least a part of the cover provided at an angle to the cross-section of the housing. By providing the cover at a small angle the opening can, as in the case of a partially recessed cover, be set back to some extent into the housing and not be situated directly on the outer surface of the container. Hereby achieved is that the opening is prevented from becoming blocked by for instance faeces of the animals in the house in which the container is arranged. This increases the effectiveness of the container according to the invention.

According to the present invention a first outer end of the housing is provided with a profile, and a second outer end with a counter-profile.

Providing a first outer end with a profile, preferably a recessed profile in which the opening is arranged, and a second outer end with a counter-profile achieves that the second outer end of a second container fits in the first outer end of a first container which has for instance to be replaced. The second container is hereby aligned in simple manner for insertion into the carrier. Damage to the housing is avoided. In addition, replacement can be carried out more easily and more quickly. This is particularly the case if the container is of biodegradable material such that a used container can be left in the house, with the above stated advantages.

The present invention further relates to a carrier comprising clamping means for clamping or carrying a container as described above.

Such a carrier provides the same effects and advantages as described for the container. The carrier is preferably provided with an entry side and an exit side for the container such that such a container can be pressed through when being replaced or removed from the carrier. Pressing through a container means that a new container to be placed is set against the used container and is pushed through. The container inserted on the entry side pushes the used container through the carrier, and this used container will leave the carrier on the exit side of this carrier and for instance drop onto the ground surface of the house. It is an additional advantage here when use is made of biodegradable material for the housing of the container. The advantages of the simple placing of a container in a carrier are hereby combined with those of the use of the biodegradable material, such that a highly efficient replacement of containers can be realized. It should be noted here by way of illustration that, in a house with for instance 30000 chickens, about 300 containers will be required which will for instance have to be replaced every 14 days. Although these numbers and periods of time are intended by way of illustration, they indicate the importance of an efficient replacement of containers.

The carrier is preferably provided with mounting means for mounting the carrier on a wall, upright or girder. Such a wall, upright or girder is preferably a part of a house, coop or cage. The mounting means are for instance a screw connection and/or a strap with which the carrier can be secured to such an element. In the case of a screw connection, additional openings are preferably provided in the carrier in order to realize such a screw connection in that a screwdriver can be inserted through this opening. An advantage of a strap or flexible strip is that a flexible connection of the carrier to the element can be realized. The strap is for instance provided for this purpose with holes which can be placed round a protrusion on the carrier after the strap has been trained round such an element.

The present invention further relates to a house for animals provided with such a carrier and/or container.

Such a house provides the same effects and advantages as described for the container and/or the carrier.

The invention further also relates to a method for biological control of a parasite in animals, comprising of providing a container as described above.

Such a method provides the same effects and advantages as described for the container and/or the carrier. These animals are preferably poultry, such as chickens.

Further advantages, features and details of the invention will be elucidated on the basis of preferred embodiments thereof, wherein reference is made to the accompanying drawings, in which:
- figure 1 shows a house provided with a container according to the invention;
- figure 2 shows a carrier with container according to the invention;
- figure 3 shows a view of the container and the carrier of figure 2;
- figure 4 shows a view of an alternative embodiment according to the invention; and
- figure 5 shows a view of a further alternative embodiment according to the invention.

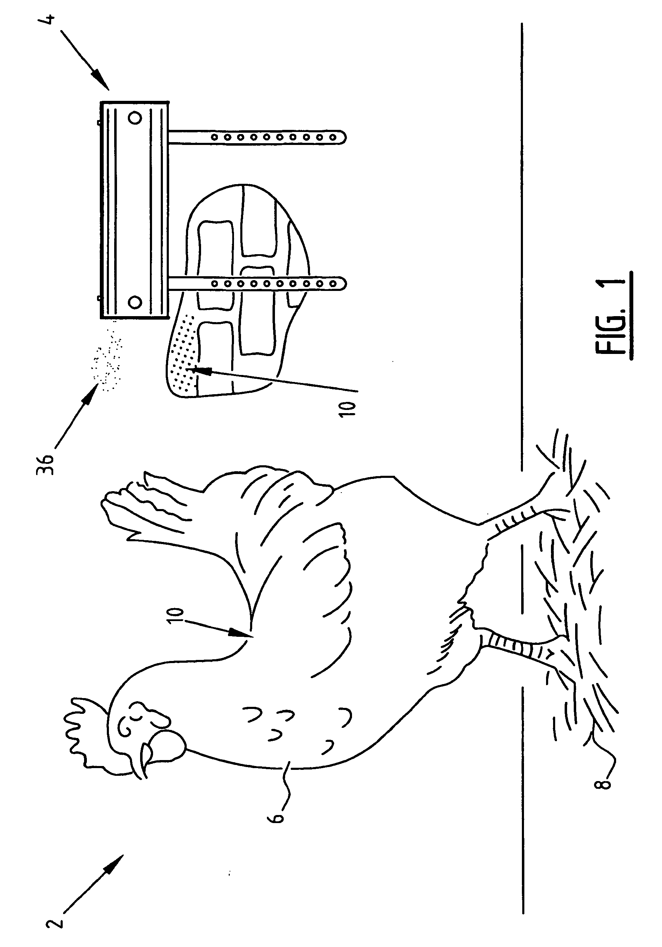

A house 2 is provided with a number of biological systems 4 (figure 1). House 2 provides space for a large number of chickens 6 situated on a ground surface 8. Chickens 6 are caused problems by parasites, in particular red mites 10, which are mainly to be found on the skin of chicken 6 at night and mainly in cracks and crevices of house 2 during the day.

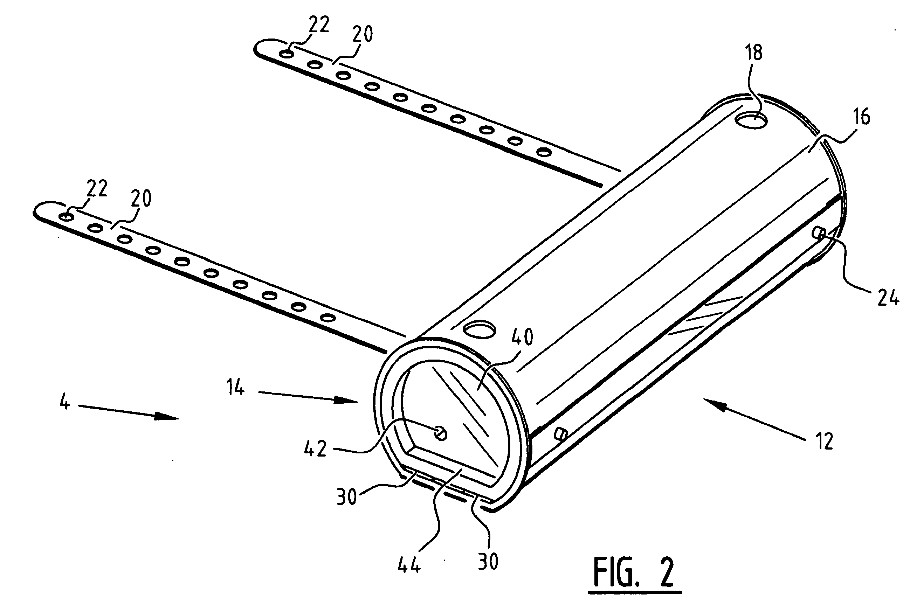

System 4 (figure 2) comprises a carrier 12 in which a cartridge 14 is arranged. Housing 16 of carrier 12 is formed in the shown embodiment as a tube and is provided with two openings 18 with which it is possible to screw carrier 12 fixedly to the wall of house 2. In the shown embodiment carrier 12 is also provided with two straps 20 in which a number of holes 22 are arranged. Strap 20 can be trained round an upright or girder of house 2, after which an opening 22 is secured on protrusion 24 provided on housing 16 of carrier 12.

If desired, belts or straps 20 can be cut to size in situ. It is also possible to omit straps 20 and/or provide straps 20 separately of carrier 12 or container 14.

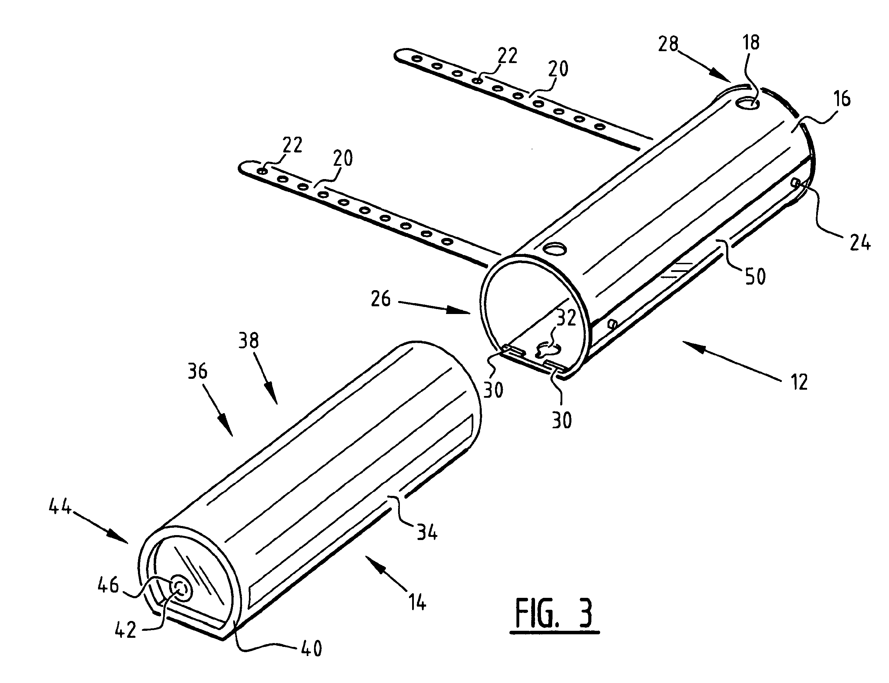

Carrier 12 is provided with an entry side 26 and an exit side 28 (figure 3). In this shown embodiment carrier 12 is manufactured from polypropylene. Provided on entry side 26 are a number of projections 30 with which cartridge 14 is prevented from sliding back out through entry side 26. The interior of carrier 12 is provided with two screw/slotted holes 32 for fixing carrier 12 to the wall of house 2. A screwdriver can here be inserted through opening 18 in order to thereby fix a screw in hole 32. It is also possible to remove carrier 12 from house 2 in this way. Container 14 is provided with walls 34, in the shown embodiment of a starch. In housing 34 the predatory mites 36 are housed together with a quantity of peat 38 which serves as substrate for predatory mites 36. At an outer end of housing 34 cartridge 14 is provided with a cover 40. In the shown embodiment a small opening 42 is provided in cover 40 through which predatory mites 36 can exit. Opening 42 is provided in a recessed part 44 of cover 40. In the shown embodiment cover 40 is likewise provided with a seal or closure 46. Seal 46 can be omitted if cartridge 14 is kept at a low temperature during transport prior to being placed.

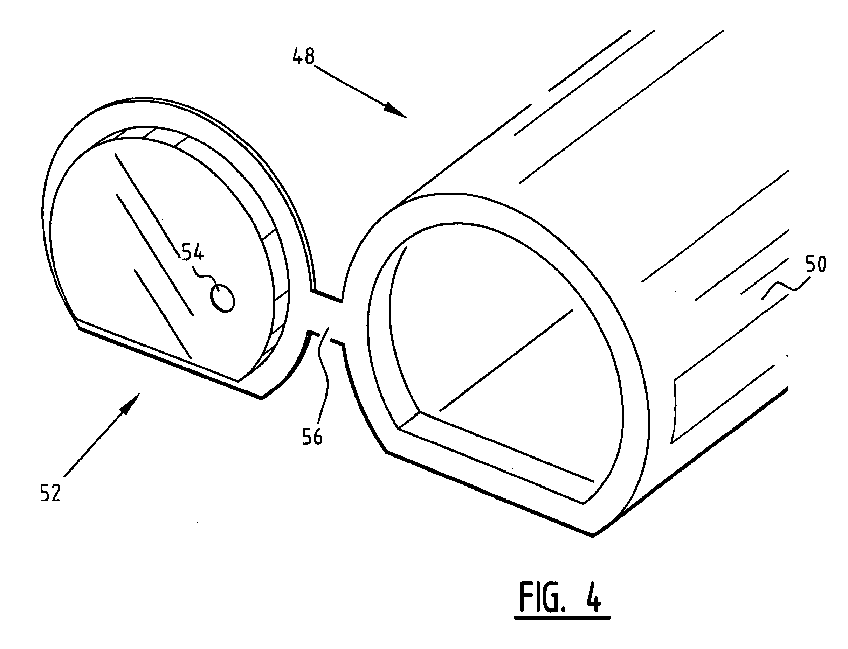

In an alternative embodiment a cartridge 48 (figure 4) is provided with a housing 50 provided with a cover 52 with opening 54. Cover 42 is provided pivotally on housing 50 of cartridge 48 using a hinge 56.

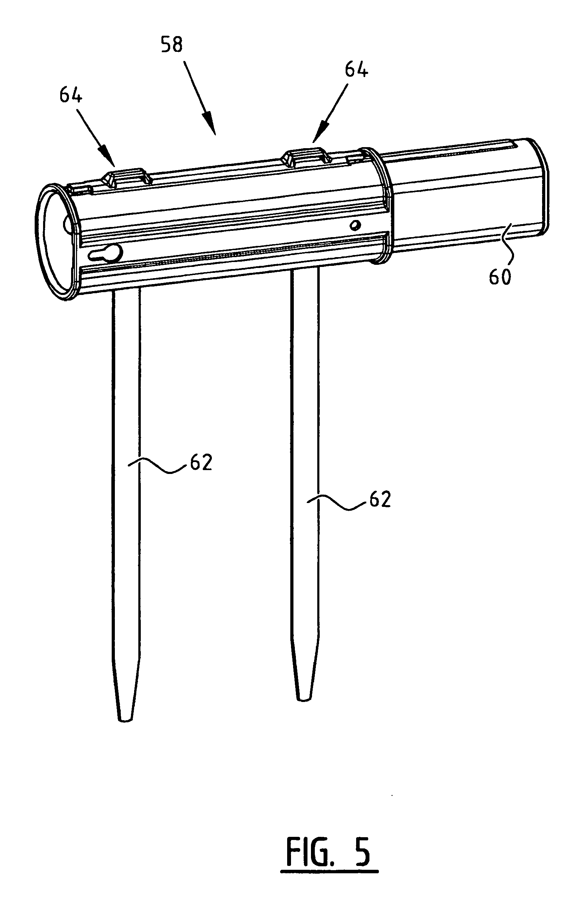

In a further alternative embodiment a container 58 (figure 5) is suitable for placing of a cartridge 60 therein. Container 58 can be fixed on for instance a pipe or upright in the house using a tie-wrap 62 and clamp 64.

In the shown embodiments cartridge 14,48 is manufactured from a biodegradable starch. Carrier 12 is manufactured from a polypropylene or, alternatively, a stainless steel material so as to make reuse possible. The use of other materials and/or combinations of measures from the different shown embodiments are of course possible.

In order to control parasites, such as red mites, in animals and particularly poultry such as chickens, containers or cartridges 14, 48 are placed in carriers 12 in house 2. Predatory mites 36 present in the interior of cartridges 14, 48 exit through opening 42, 54 and hunt for the parasites such as red mites 10 in order to stay alive. The nuisance caused by these parasites 10 is hereby greatly reduced, and the health of for instance chicken 6 in house 2 is improved. This improvement can take place in continuous manner, if required, by repeatedly refilling cartridges 14, 48 and/or replacing these cartridges with new cartridges 14, 48.

The present invention is by no means limited to the above described embodiments thereof. The rights sought are defined by the following claims.

## Claims

1. Container (14) for controlling a parasite (10) in animals (6), comprising:
- a housing (16) suitable for a substrate (38) and provided with an opening (42);
- arthropods which are arranged in the housing and which can come out of the opening in order to control the parasite,
**characterized in that** a first outer end of the housing is provided with a profile, and a second outer end with a counter-profile.

2. Container as claimed in claim 1, wherein the arthropod is a predatory mite.

3. Container as claimed in claim 1 or 2, wherein the housing comprises biodegradable material.

4. Container as claimed in claim 1, 2 or 3, wherein the housing comprises a cover (40) in which the opening is provided.

5. Container as claimed in claim 4, wherein the opening is provided recessed into the cover of the housing.

6. Container as claimed in claim 4 or 5, wherein the cover is provided at an angle to a cross-section of the housing.

7. Carrier (12) comprising clamping means for clamping or carrying a container (14) as claimed in one or more of the claims 1-6.

8. Carrier as claimed in claim 7, further comprising an entry side (26) and an exit side (28) for the container such that the container can be pressed through when being replaced or removed.

9. Carrier as claimed in claim 7 or 8, comprising mounting means for mounting the carrier on a wall, upright or girder.

10. Carrier as claimed in claim 7, 8 or 9, further provided with a container as claimed in one or more of the claims 1-6.

11. House (2) for animals (6) provided with a carrier (12) and/or container (14) as claimed in one or more of the foregoing claims.

12. Method for biological control of a parasite (10) in animals (6), comprising of providing a container (14) as claimed in one or more of the claims 1-6.

13. Method as claimed in claim 12, wherein the animals are poultry.

14. Method as claimed in claim 12 or 13, further comprising of storing and/or transporting the container with the animals at relatively low temperature, wherein the opening (42) can remain open during transport.

## Patentansprüche

1. Behälter (14) zum Bekämpfen eines Parasiten (10) in Tieren (6) enthaltend:
- ein Gehäuse (16), das geeignet für ein Substrat (38) und mit einer Öffnung (42) versehen ist;
- Arthropoden, die in dem Gehäuse untergebracht sind und aus einer Öffnung heraus kommen können, um den Parasiten zu bekämpfen,
**dadurch gekennzeichnet, dass** ein erstes äußeres Ende des Gehäuses mit einem Profil versehen ist und dass ein zweites äußeres Ende mit einem Gegenprofil versehen ist.

2. Behälter nach Anspruch 1, wobei der Anthropode eine Raubmilbe ist.

3. Behälter nach Anspruch 1 oder 2, wobei das Gehäuse ein biologisch abbaubares Material aufweist.

4. Behälter nach Anspruch 1, 2 oder 3, wobei das Gehäuse einen Deckel (40) aufweist, in dem sich die Öffnung befindet.

5. Behälter nach Anspruch 4, wobei die Öffnung in dem Deckel des Gehäuses ausgespart vorgesehen ist.

6. Behälter nach Anspruch 4 oder 5, wobei der Deckel in einem Winkel zu einem Querschnitt des Gehäuses vorgesehen ist.

7. Träger (12) enthaltend Klemm-Mittel zum Klemmen oder Tragen eines Behälters wie nach einem oder mehreren der Ansprüche 1 bis 6 beansprucht.

8. Träger nach Anspruch 7, ferner enthaltend eine Eintrittseite (26) und eine Austrittseite (28) für den Behälter, so dass der Behälter hindurchgepresst werden kann, wenn er ersetzt oder entfernt wird.

9. Träger nach Anspruch 7 oder 8, enthaltend Befestigungsmittel zum Befestigen des Trägers an einer Wand, aufrecht oder Träger.

10. Träger nach Anspruch 7, 8 oder 9, ferner versehen mit einem Behälter, wie in einem oder mehreren der Ansprüche 1 bis 6 beansprucht.

11. Haus (2) für Tiere (6), versehen mit einem Träger (12) und/oder Behälter (14), wie in einem oder mehreren der vorhergehenden Ansprüche beansprucht.

12. Verfahren zur biologischen Bekämpfung eines Parasiten (10) in Tieren (6) enthaltend Bereitstellen eines Behälters (14) wie in einem oder mehreren der Ansprüche 1 bis 6 beansprucht.

13. Verfahren nach Anspruch 12, wobei die Tiere Geflügel sind.

14. Verfahren nach Anspruch 12 oder 13, enthaltend das Speichern und/oder Transportieren des Behälters mit den Tieren bei relativ niedriger Temperatur, wobei die Öffnung (42) während des Transports offen bleiben kann.

## Revendications

1. Conteneur (14) destiné à lutter contre un parasite (10) chez des animaux (6), comprenant :
- un boîtier (16) adapté pour un substrat (38) et pourvu d'une ouverture (42) ;
- des arthropodes qui sont disposés dans le boîtier et qui peuvent sortir de l'ouverture afin de lutter contre le parasite, **caractérisé en ce qu'**une première extrémité externe du boîtier est pourvue d'un profil, et une deuxième extrémité externe d'un contre-profil.

2. Conteneur selon la revendication 1, l'arthropode étant un acarien prédateur.

3. Conteneur selon la revendication 1 ou 2, le boîtier comprenant un matériau biodégradable.

4. Conteneur selon la revendication 1, 2 ou 3, le boîtier comprenant un couvercle (40) dans lequel l'ouverture est disposée.

5. Conteneur selon la revendication 4, l'ouverture étant disposée évidée dans le couvercle du boîtier.

6. Conteneur selon la revendication 4 ou 5, le couvercle étant disposé à un angle par rapport à une section transversale du boîtier.

7. Support (12) comprenant des moyens de serrage pour serrer ou porter un conteneur (14) selon une ou plusieurs des revendications 1 à 6.

8. Support selon la revendication 7, comprenant en outre un côté entrée (26) et un côté sortie (28) pour le conteneur de sorte que le conteneur puisse être pressé lorsqu'il est remplacé ou enlevé.

9. Support selon la revendication 7 ou 8, comprenant des moyens de montage pour monter le support sur une paroi verticale ou une poutre.

10. Support selon la revendication 7, 8 ou 9, comprenant en outre un conteneur selon une ou plusieurs des revendications 1 à 6.

11. Logement (2) pour animaux (6) pourvu d'un support (12) et/ou conteneur (14) selon une ou plusieurs des revendications précédentes.

12. Procédé destiné à lutter biologiquement contre un parasite (10) chez des animaux (6), comprenant la fourniture d'un conteneur (14) selon une ou plusieurs des revendications 1 à 6.

13. Procédé selon la revendication 12, les animaux étant des volailles.

14. Procédé selon la revendication 12 ou 13, comprenant en outre le stockage et/ou le transport du conteneur avec les animaux à une température relativement basse, l'ouverture (42) pouvant rester ouverte pendant le transport.
